# EUROPEAN PATENT APPLICATION

(11) **EP 1 759 757 A1**
(43) Date of publication of application: **07.03.2007**
(21) Application number: 06119887.5
(22) Date of filing: 31.08.2006
(51) Int. Cl.: B01D 53/32

(54) **Gas decomposition apparatus**

(30) Priority: 06.09.2005 JP 2005258589
(71) Applicant: CANON KABUSHIKI KAISHA, Ohta-ku Tokyo 146-8501 (JP)
(72) Inventor: Kaneko, Yoshiaki, Tokyo Tokyo 146-8501 (JP); Nishiguchi, Toshiji, Tokyo Tokyo 146-8501 (JP); Iwama, Hideo, Tokyo Tokyo 146-8501 (JP); Tamura, Junichi, Tokyo Tokyo 146-8501 (JP)
(74) Representative: TBK-Patent

(57) **Abstract**

A gas decomposition apparatus including at least a set of a high-voltage electrode and a ground electrode, an electric power supply for applying a voltage between the high-voltage electrode and the ground electrode to induce a plasma discharge therebetween, a dielectric substance, and a plasma processing unit. The dielectric substance is disposed between the high-voltage electrode and the ground electrode, and is capable of allowing a gas to be decomposed to flow therethrough. The high-voltage electrode, the ground electrode, and the dielectric substance are disposed in the plasma processing unit. At least one of the high-voltage electrode and the ground electrode is composed of an elastic conductive material and is capable of matching a surface profile of the dielectric substance.

## Description

### BACKGROUND OF THE INVENTION

### Field of the Invention

The present invention relates to a gas decomposition apparatus, which is capable of rendering harmful gases or the like harmless or non-hazardous, or easy to capture, using a plasma decomposing method. Such gases contain volatile organic compounds (VOCs) that are exhausted as a result of carrying out various kinds of industrial processes.

### Description of the Related Background Art

VOCs, such as toluene, xylene and methyl ethyl ketone (MEK), are harmful chemical substances that are generated in painting processes and the like, which use organic solvents. In the past, VOCs were, in fact, released into the atmospheric or ambient air. In recent years, however, Pollutant Release and Transfer Register (PRTR) system is being enforced, and a reduction of VOCs, which are detrimental to the environment, is socially required. Thus, the technology for making VOCs harmless or non-hazardous has been widely researched and developed.

In connection with such technology, discharge-using technology for making VOCs non-hazardous is watched with a keen interest. Particularly, a dielectric-loading method attracts attention. In the dielectric-loading type technology, voltage is applied to a dielectric material loaded in a chamber through an electrode under atmospheric pressure (e.g., a normal pressure). A plasma discharge, such as a glow discharge, is accordingly induced in a space gap between dielectric materials, and plasma is generated. VOCs or gases to be decomposed are introduced into the plasma-generated space gap so that they can be decomposed into carbon dioxide, water, etc., using the oxidation action of the plasma.

Ceramic materials are most often used as a dielectric in the plasma processing apparatuses. In this case, the surface of the dielectric in contact with the electrode is likely to wear out due to vibrations that occur during the discharge. Especially, in a case where porous ceramics are used as the dielectric, and metal plate, metal rod, metal net, or the like is used as the electrode, the strength of the dielectric is low due to its foam-type configuration, leading to a considerable likelihood that the foamed dielectric splits, cracks, or is worn out by the stress. It is, therefore, critical for the dielectric-loading method to prevent or reduce the damage to the dielectric material. Various techniques have been proposed to carry out such prevention or reduction.

Japanese Patent Application Laid-open No.2002-253658 discloses an air clarification apparatus in which a porous ceramic material coated with a photocatalyst (hereinafter referred to as photocatalytic filter) is interposed between a pair of electrodes, and a buffer material is disposed between the electrode and the photocatalytic filter. According to this technique, the photocatalytic filter can be prevented from wearing out due to the presence of the buffer material.

However, in the above structure, in which the buffer material is disposed between the electrode and the photocatalytic filter, the electrode and the dielectric material (i.e., the porous ceramic) cannot be brought into precise contact with each other because the surface of the dielectric material is largely uneven. Therefore, it is difficult to establish a stable electric field. Further, unstable discharges lead to an increase in materials synthesized by the discharge, such as nitrogen oxide, and result in a decrease in the decomposition efficiency.

### SUMMARY OF THE INVENTION

It is an object of the present invention to provide a gas decomposition apparatus or gas processing cartridge with a gas decomposition efficiency is relatively high, and in which an electrode of an elastic or resilient electrically conductive material is used to prevent or reduce the damage to the dielectric material due to stress, and establish a stable electric field due to an improved close contact between the electrode and the dielectric material.

According to one aspect of the present invention, there is provided a gas decomposition apparatus that includes at least a set of a high-voltage electrode and a ground electrode; an electric power supply for applying a voltage between the high-voltage electrode and the ground electrode to induce plasma discharge therebetween; a dielectric substance, which is interposed between the high-voltage electrode and the ground electrode, and which is capable of allowing a gas to be decomposed to pass therethrough; and a plasma processing unit in which the high-voltage electrode, the ground electrode, and the dielectric substance are disposed. At least one of the high-voltage electrode and the ground electrode is composed of an elastic conductive material and is capable of matching a surface profile of the dielectric substance.

The features of the present invention will be more readily understood in view of the following detailed description of the embodiments and examples of the invention with reference to the drawings.

### BRIEF DESCRIPTION OF THE DRAWINGS

Fig. 1 is a cross-sectional view schematically illustrating the structure of a gas decomposition apparatus of an embodiment according to the present invention.

Fig. 2 is a schematic perspective view illustrating the structure of a gas processing cartridge including a high-voltage electrode, a ground electrode, and a dielectric material illustrated in Fig. 1.

Fig. 3 is a cross-sectional view schematically illustrating the structure of a gas decomposition apparatus used in each Example of the present invention and in the Comparative Example.

Fig. 4 is a table showing chief conditions and results from each Example of the present invention and from the Comparative Example.

### DESCRIPTION OF THE EMBODIMENTS

A preferred embodiment of a gas decomposition apparatus or cartridge in accordance with the present invention is described below with reference to the drawings.

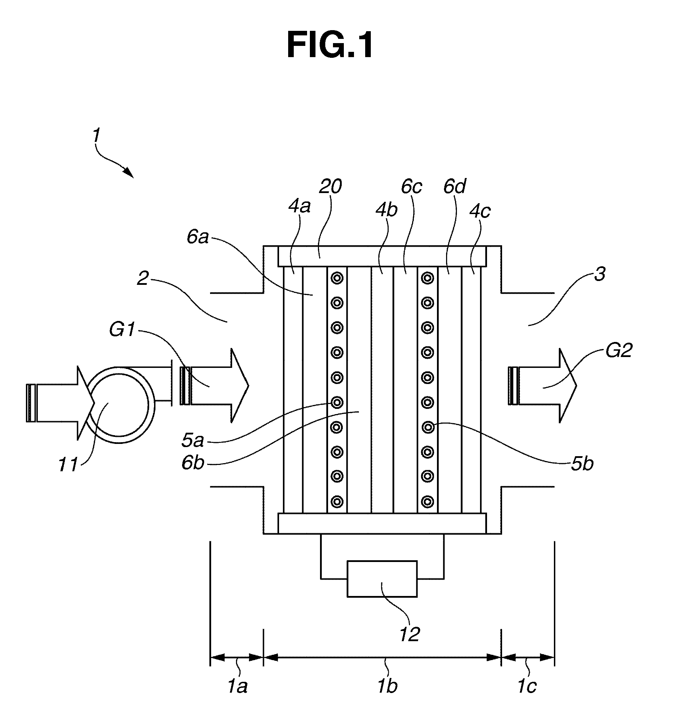

In Fig. 1, which illustrates an embodiment of a gas decomposition apparatus, a gas decomposition apparatus 1 includes a gas inlet portion 1a, a plasma processing unit 1b, and a gas outlet portion 1c. The gas inlet portion 1a includes a gas introducing port 2 for introducing therethrough a gas G1, which is to be decomposed. The plasma processing unit 1b is for plasma-processing the gas G1 to be decomposed introduced therein through the gas inlet portion 1a. The gas outlet portion 1c includes a gas exhausting port 3 for exhausting a decomposed gas G2, which is produced when gas G1 to be decomposed is subjected to plasma processing in the plasma processing unit 1b, outside the system. A fan 11 for guiding the gas G1 to be decomposed to the gas inlet portion 1a is arranged upstream the gas inlet portion 1a along a gas flowdirection.

In the plasma processing unit 1b, the sequence of arrangement from an upstream side of the gas flow is as follows: a first ground electrode 4a, a first dielectric substance 6a, a first high-voltage electrode 5a, a second dielectric substance 6b, a second ground electrode 4b, a third dielectric substance 6c, a second high-voltage electrode 5b, a fourth dielectric substance 6d, and a third ground electrode 4c. A space gap is provided between the high-voltage electrode 5a or 5b and the dielectric substance 6a, 6b, 6c or 6d. While it is possible for plasma to form even when no space gap is formed, it is, however, preferable to provide this space gap so that stable plasma can be created with no or little influence by the humidity in the atmosphere.

The space gap can be appropriately set depending on the applied voltage and the humidity conditions of the gas G1 to be decomposed. When the gap is less than 0.5 mm, it is likely that discharges become unstable under high humidity. Conversely, when the gap is larger than 1.6 mm, a high voltage needs to be applied to form plasma. Therefore, the space gap is preferably between about 0.5 mm and about 1.5 mm.

The above-discussed members are disposed covering the overall section (a cross-section traversing the gas flow) of the plasma processing unit 1b within a support portion 20 for supporting those members, so that the total amount of the gas G1 to be decomposed from the gas introducing port 2 passes through those members. In other words, those members are disposed in the plasma processing unit 1b of the gas decomposition apparatus 1, into which the gas G1 to be decomposed is introduced, so that plasma is formed by plasma induction discharges, such as a glow discharge, between the electrodes under, for example, atmospheric pressure. The members are disposed in the plasma processing unit 1b so that substantially the entire amount of the gas G1 to be decomposed can pass through each of the dielectric substances 6a to 6d. Each member is removably or fixedly arranged in the plasma processing unit 1b.

The ground electrodes 4a, 4b and 4c are formed, respectively, of the same or different elastic conductive materials that allow air to pass therethrough (permeability). It is not necessary for the entire ground electrode to be elastic or resilient. Only a portion of the ground electrode can be elastic or resilient. The surface of each ground electrode formed of the elastic conductive material faces, and is in close contact with, the surface of each dielectric substance.

For example, in a case where the ground electrode formed of the elastic conductive material is about 2 mm thick, even if the surface contour of the dielectric substance in contact with the ground electrode is displaced (the amount of displacement is about 0.5 mm), the surface of the ground electrode follows the displacement, and maintains the contact with the dielectric substance without any movement of the ground electrode.

An other preferred structure in accordance with the present invention is as follows. In this structure, both the ground electrode and the high-voltage electrode are formed of elastic conductive materials, respectively. In such a structure, contact conditions without any space gap are established between the dielectric substance and the high-voltage electrode, and between the dielectric substance and the ground electrode, respectively. Alternatively, it is also possible to form a space gap either between the dielectric substance and the high-voltage electrode, or between the dielectric substance and the ground electrode.

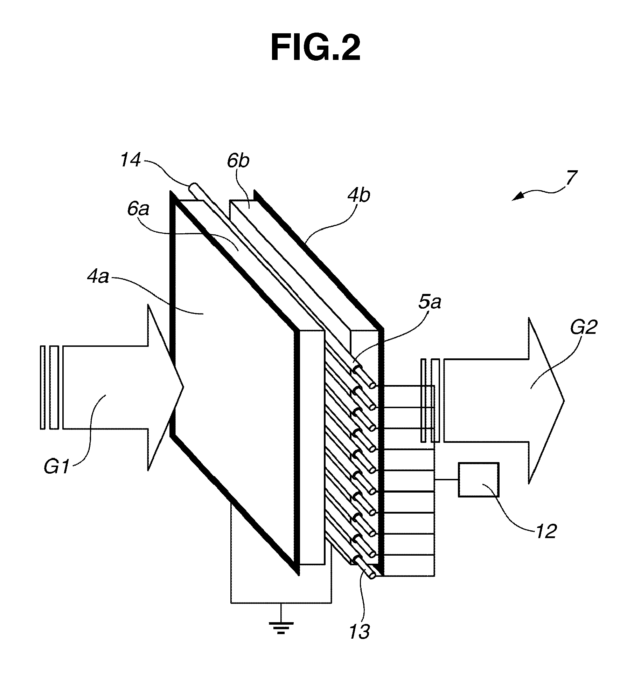

The high-voltage electrodes 5a and 5b are composed of plural metal electrodes 13 coated with dielectric material 14, respectively (see Fig. 2). Ineach of the high-voltage electrodes 5a and 5b, plural metal electrodes 13 are disposed in a generally parallel manner with an interval therebetween. Accordingly, each high-voltage electrode has air-passing holes between the plural metal electrodes 13, through which the gas G1 to be decomposed can pass. As described above, an elastic conductive material having air-passing characteristics can be used not only for the ground electrode, but also for the high-voltage electrode. That is, such a material can be used for at least one of the ground electrode and the high-voltage electrode.

The ground electrodes 4a, 4b and 4c are grounded by appropriate means, respectively. For example, the ground electrode is connected to a grounded wire by an aluminum tape, or the like. The high-voltage electrodes 5a and 5b are connected to an AC (alternating current) high-voltage power supply 12, respectively. The first ground electrode 4a and the first high-voltage electrode 5a, the second ground electrode 4b and the first high-voltage electrode 5a, the second ground electrode 4b and the second high-voltage electrode 5b, and the third ground electrode 4c and the second high-voltage electrode 5b are disposed facing each other, respectively.

Upon application of alternating current (AC) at high voltages to the high-voltage electrodes 5a and 5b by the high-voltage power supply 12, discharges, such as glow discharges, are induced between those pairs of the electrodes under atmospheric pressure, and plasma is created. The glow discharge that is induced by a relatively high voltage is preferable, because it results in a high gas processing rate.

The dielectric substances 6a to 6d disposed between those pairs of the electrodes are thus subjected to plasma created between them, respectively. The high-voltage electric power supply 12 can supply power at frequencies ranging from commercial power frequencies of 50 Hz and 60 Hz to high frequencies in the MHz range. Ordinarily, power supplies with voltage outputs from several kV to several tens kV are used. There is, however, no limitation on the high-voltage power supply usable in the gas decomposition apparatus 1 of this embodiment.

Fig. 2 is a schematic perspective view illustrating a cartridge with the ground electrodes, the high-voltage electrodes, and the dielectric substances shown in Fig. 1. The cartridge 7 is a package in which the ground electrodes, the high-voltage electrodes, and the dielectric substances are integrally assembled. The cartridge 7 can be removably installed in the plasma processing unit 1b of the gas decomposition apparatus 1. Accordingly, the cartridge 7 can be replaced for another after use over a predetermined period of time, or if its performance deteriorates beyond acceptable limits.

A support portion for removably supporting the cartridge 7 (e.g., a member like the support portion 20 illustrated in Fig. 1) is disposed in the plasma processing unit 1b of the gas decomposition apparatus 1. In lieu of such a cartridge system, the components in this structure can be fixed.

Each of the high-voltage electrodes 5a and 5b, for example, is composed of plural rod-shaped metal electrodes 13 coated with dielectric 14. The outer diameter of the metal electrode 13 is preferably in a range from about 1 mm to about 2 mm. The diameter of the metal electrode 13 is determined taking into consideration its durability, resistance, etc. For example, if the electrode is too thin, there is problem associated with durability. Conversely, if the electrode is too thick, it becomes harder to generate the discharges.

The metal electrode 13 can be made from an electrically conductive material, such as stainless steel, copper, brass, aluminum, iron, and tungsten. The dielectric material 14 covering the metal electrode 13 is preferably a ceramic material with a large relative dielectric constant. The dielectric material can be, for example, alumina, zirconium oxide, silicon oxide, and barium titanate. The thickness of the dielectric 14 can be appropriately selected so as not to lead to a dielectric breakdown due to the voltage applied. The thickness of the dielectric material 14 is preferably from about 100 microns to about 500 microns, so that the voltage for initiating discharges can be reduced.

The metal electrode 13 can be covered with the dielectric 14 using various methods, which include inserting the metal electrode 13 into a tube-shaped ceramic, coating the metal electrode 13 with the ceramic material, or the like. The coating method is preferred in order to minimize a decrease in the electric power consumption efficiency, which may occur when discharges appear in a space gap between the metal electrode 13 and the dielectric 14. The profile (i.e., a cross-sectional shape of a pattern) of the metal electrode 13 coated with the dielectric 14 is appropriately set considering the following factors: the dielectric substances 6a to 6d can be accommodated, uniform voltage can be applied to each of the dielectric substances 6a to 6d, and the gas G1 to be decomposed can pass through the plural metal electrodes 13 without experiencing any substantial pressure losses.

As described above, each of the ground electrodes 4a to 4c is composed of the elastic conductive material with air permeability. The elastic conductive material can be selected, for example, from metal, wool, aluminum foamed body (one that includes a sufficiently thin skeletal structure so that the above elastic properties can be attained), and carbon fiber. To further improve the gas decomposition efficiency, it is preferable to provide an activated carbon fiber, which is capable of adsorbing and capturing process substances, on the surface of the electrode. Further, it is more preferable to cover the activated carbon fiber with a catalyst for promoting the decomposition process. The appropriate material for the catalyst can be selected, for example, from a noble metal, such as platinum, silver, palladium, and rhodium, a metal, such as nickel, and manganese dioxide.

The structure of the dielectric substances 6a to 6d is described below. Each of the dielectric substances 6a to 6d is formed of a porous dielectric substrate. More specifically, the substrate can be a dielectric substrate, such as a honeycomb-shaped ceramic, and a sintered body of a granular ceramic. Particularly, considering that the strength is relatively large and the pressure loss for the gas to be decomposed is relatively small, it is preferable to use a substrate, which has a dielectric skeletal structure of a ceramic and a three-dimensional net-shaped flow path structure formed therein.

It is preferable to cover the dielectric substrate with a ferroelectric film that has a relative dielectric constant that is greater than that of the dielectric substrate, since plasma can be generated by applying a relatively small voltage and the amount of heat generated by the dielectric material can be reduced. The material for the dielectric substrate preferably has a relative dielectric constant below 50, such as alumina, zirconium oxide, or the like. The material for the ferroelectric film preferably has a relative dielectric constant of over 1000, such as barium titanate, strontium titanate, or the like.

To further improve the gas decomposition efficiency, it is preferable to cover the surface of the ferroelectric film with an adsorbent, which is capable of adsorbing and capturing process substances. Further, it is more preferable to cover the adsorbent with a catalyst for promoting the decomposition process. Materials suitable for use as the absorbent include zeolite, gamma-alumina, or the like. Material suitable for use as the catalyst include a noble metal, suchasplatinum, silver, palladium, and rhodium, a metal, such as nickel, manganese dioxide, or the like.

The operation of the gas decomposition apparatus 1 of this embodiment is described below. As shown in Fig. 1, the gas G1 to be decomposed containing VOCs is guided to the dielectric substances 6a to 6d in the plasma processing unit 1b through the gas inlet portion 1a by the fan 11. Voltage is applied between the ground electrodes 4a to 4c and the high-voltage electrodes 5a and 5b, respectively, by the high-voltage power supply 12. Discharges occur at surfaces and holes of the dielectric substances 6a to 6d sandwiched by those electrodes, and plasma is generated under atmospheric pressure (e.g., a normal pressure). The gas G1 to be decomposed introduced into the holes of the dielectric substances 6a to 6d is brought into contact with the plasma and is oxidized and decomposed by the plasma. The gas G1 to be decomposed is thus subj ected to a process for rendering it non-hazardous and the like. The thus-decomposed gas G2 is guided to the gas outlet portion 1c and exhausted outside the gas decomposition apparatus 1 through the gas exhausting port 3.

As described above, each of the ground electrodes 4a to 4c in the gas decomposition apparatus of this embodiment is composed of the elastic conductive material. Accordingly, the dielectric substances 6a to 6d are preferably in close contact with the ground electrodes 4a to 4c, respectively, so that high density uniform electric fields can be established on surfaces of the dielectric substances 6a to 6d. Thus, gas processing can be very efficiently executed. Further, due to the elastic displacement-following characteristics of the elastic conductive ground electrodes 4a to 4c, it is possible to reduce the vibration-induced wear damage and the like on the surfaces of dielectric substances.

Further, in the structure of the apparatus in accordance with this embodiment, the gas decomposition efficiency can be further improved when the ground electrodes 4a to 4c are composed of an activated carbon fiber material, respectively, and when the activated carbon fiber is also coated with a catalyst for increasing the decomposition rate.

Advantageous effects of the gas processing according to the present invention are described more specifically in the following examples. It is to be understood that these examples are presented for illustration purposes only and are not intended to limit the present invention.

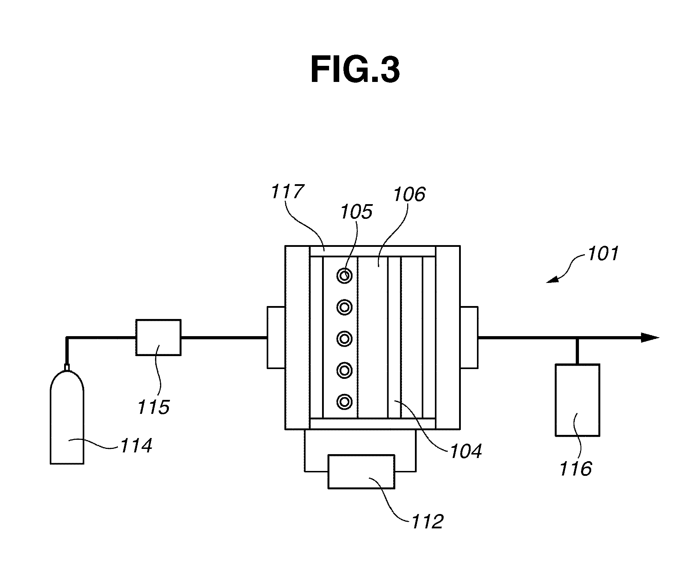

Fig. 3 schematically illustrates the structure of a gas decomposition apparatus for use in Examples 1 and 2 and the Comparative Example. In Examples 1 and 2 and the Comparative example, a gas container 114 loaded with a gas to be decomposed is connected to the gas inlet port of a gas decomposition apparatus 101 through a flow controller 115. A net volume of the plasma processing unit 117 of the gas decomposition apparatus 101 is 60.5 cm³. The gas exhausting port of the gas decomposition apparatus 101 is connected to an analyzer 116 (a gas chromatograph manufactured by Shimazu Seisakusho K.K.) through a pipe. The gas to be decomposed is toluene gas at a concentration of 1 ppm. The flow controller 115 regulates the amount of flow of the gas to be decomposed to 350 L/min.

In the Example 1, the structures of each electrode and each dielectric substance are somewhat simpler than those in the above embodiment. A dielectric substance 106 with an outer size of 110 mm*110 mm*5 mm is sandwiched between a ground electrode 104 and a high-voltage electrode 105 connected to a high-voltage power supply 112. The ground electrode 104 is formed from a nonwoven or unwoven elastic carbon fiber fabric that has not been subjected to the activation process. The ground electrode 104 has a thickness of 3 mm and a sieve roughness of 50 g/m². The high-voltage electrode 105 is comprised of plural tungsten rods, each of which has a diameter of 1 mm, and is sheathed with an alumina tube having a 2 mm outer diameter and a 1 mm inner diameter.

A space gap of 0.5 mm is formed between the dielectric substance 106 and the high-voltage electrode 105, and the ground electrode 104 is brought into contact with the dielectric substance 106. The dielectric substance 106 is fabricated by coating a porous alumina substrate with barium titanate of a ferroelectric material with a relative dielectric constant of 4000, and sintering the barium-titanate-coated porous alumina substrate at 1250 degrees centigrade. The thickness of the ferroelectric film is 20 microns. The averaged interval between flow paths in the dielectric substance 106 is 1 mm, and its porosity rate is 80 %.

In Example 2, the ground electrode 104 is composed of a nonwoven or unwoven elastic activated carbon fiber fabric. The other conditions in Example 2 are the same as those in Example 1.

In the Comparative Example, the ground electrode 104 is composed of a stainless steel rod with a diameter of 1 mm. In the Comparative Example, both the high-voltage electrode 105 and the ground electrode 104 are brought into contact with the dielectric substance 106, respectively. No gap is thus present between the dielectric substance and the electrodes. The other conditions in the Comparative Example are the same as those in Example 1.

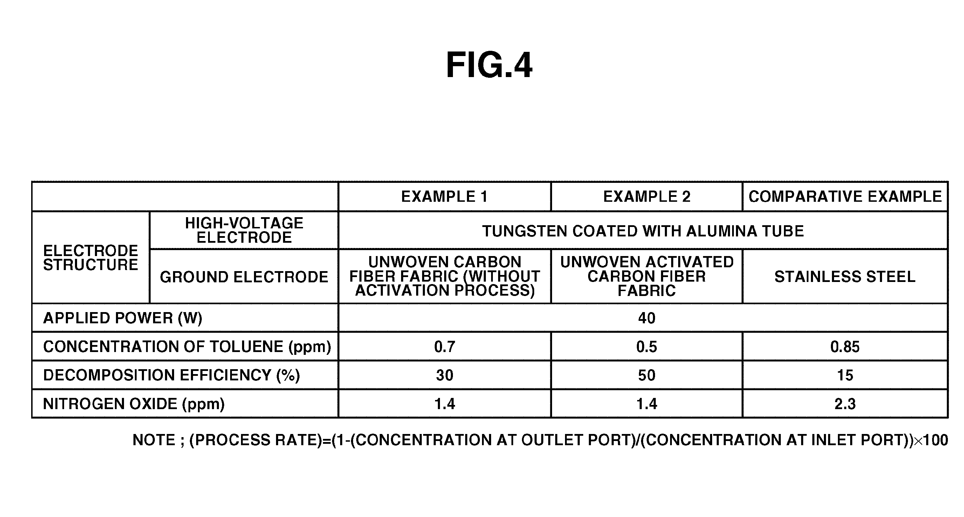

Using the gas decomposition apparatuses of Example 1, Example 2, and the Comparative Example, the process of rendering the gas to be decomposed non-hazardous or harmless is carried out. Table in Fig. 4 shows chief conditions and results of the respective examples. The decomposition efficiency is defined as equal to (1- (concentration at outlet port) / (concentration at inlet port))*100), as described in the Table in Fig. 4.

In the Comparative Example, since the stainless steel rod is used as the ground electrode 104, it is impossible to stably establish uniform electric fields on surfaces of the dielectric substance 106. Therefore, in the Comparative Example, the process ability or decomposition efficiency is inferior to those in Examples 1 and 2, and the concentration of the synthesized nitrogen oxide is higher than that in Examples 1 and 2.

As described in the foregoing, in gas decomposition apparatuses or methods of the present invention, at least one of a pair of electrodes is formed of an elastic conductive material, so that it is possible to bring the electrode into close contact with a dielectric substance, and uniformly form high-density electric fields. As a result, the gas to be decomposed can be processed with a relatively high efficiency. Further, damage, such as wear of the surface of the dielectric material due to vibrations, can be reduced or prevented.

The process efficiency or decomposition efficiency can be further improved when the electrode is composed of activated carbon fibers, and when the activated carbon fibers are further coated with a catalyst for increasing the decomposition rate.

Gas decomposition apparatuses and gas processing cartridges of the present invention can process VOCs, materials emitting rank odors, and the like. Therefore, the present invention can be widely used to process materials in various private, commercial and industrial scales. The offensive odors emitted by polluted soil, in various spaces, such as rooms in which people gather and live, and by pollutant gases emitted by a motor vehicle and the like.

Except as otherwise disclosed herein, the various components shown in the figures are individually well-known and their internal construction and operation are not critical either to the making or using of the present invention or to a description of the preferable embodiments.

While the present invention has been described with respect to what is presently considered to be the embodiments and examples, it is to be understood that the invention is not limited to the disclosed embodiments and examples. The present invention is intended to cover various modifications and equivalent arrangements included within the spirit and the scope of the appended claims.

This application claimspriorityfrom Japanese Patent Application No. 2005-258589, filed September 6, 2005, the contents of which are hereby incorporated by reference.
A gas decomposition apparatus including at least a set of a high-voltage electrode and a ground electrode, an electric power supply for applying a voltage between the high-voltage electrode and the ground electrode to induce a plasma discharge therebetween, a dielectric substance, and a plasma processing unit. The dielectric substance is disposed between the high-voltage electrode and the ground electrode, and is capable of allowing a gas to be decomposed to flow therethrough. The high-voltage electrode, the ground electrode, and the dielectric substance are disposed in the plasma processing unit. At least one of the high-voltage electrode and the ground electrode is composed of an elastic conductive material and is capable of matching a surface profile of the dielectric substance.

## Claims

1. A gas decomposition apparatus comprising:
at least a set of a high-voltage electrode and a ground electrode;
an electric power supply for applying a voltage between the high-voltage electrode and the ground electrode to induce a plasma discharge therebetween;
a dielectric substance, which is disposed between the high-voltage electrode and the ground electrode and is capable of allowing a gas to be decomposed to pass therethrough; and
a plasma processing unit in which the high-voltage electrode, the ground electrode, and the dielectric substance are disposed,
wherein at least one of the high-voltage electrode and the ground electrode is composed of an elastic conductive material and is capable of matching a surface profile of the dielectric substance.

2. The gas decomposition apparatus according to claim 1, wherein at least one of the high-voltage electrode and the ground electrode includes at least one of a catalyst and an adsorbent.

3. The gas decomposition apparatus according to claim 1, wherein the elastic conductive material is selected from activated carbon fiber, carbon fiber, metal wool, or aluminum foamed body.

4. The gas decomposition apparatus according to claim 1, wherein the set of the high-voltage electrode and the ground electrode and the dielectric substance are integrally assembled into a cartridge, and the cartridge is removably installed in the plasma processing unit via a support portion.

5. The gas decomposition apparatus according to claim 1, wherein there is a gap between the high-voltage electrode and the dielectric substance.

6. The gas decomposition apparatus according to claim 5, wherein the gap is from about 0.5 mm to about 1.5 mm.
